# EUROPÄISCHE PATENTANMELDUNG

(11) **EP 1 244 314 A1**
(43) Veröffentlichungstag der Anmeldung: **25.09.2002**
(21) Anmeldenummer: 01107062.0
(22) Anmeldetag: 21.03.2001
(51) Int. Cl.: H04Q 3/00, H04M 3/22

(54) **Verfahren zur Verwaltung von Überwachungsdaten**

(71) Anmelder: SIEMENS AKTIENGESELLSCHAFT, 80333 München (DE)
(72) Erfinder: Kreusch, Norbert, 82061 Neuried (DE); Stifter, Helmut, 81739 München (DE)

(57) **Zusammenfassung**

Ein Verfahren und Telekommunikationssystem (SYS) zur Verwaltung von Überwachungsdaten (ÜDA), die zur Überwachen eines Telekommunikationsendgerätes (TEA) mittels einer ihm zugeordneten Heimatvermittlungsstelle (VEA) eines intelligenten Netzwerks (INN) dienen, wobei die Überwachungsdaten (ÜDA) in einer ausgewählten Vermittlungsstelle (VEZ) des intelligenten Netzes zentral verwaltet werden, und auf Anforderung an die Heimatvermittlungsstelle (VEA) übermittelt werden, die anhand dieser Überwachungsdaten (DAT) die Überwachung des Telekommunikationsendgerätes (TEA) durchführt.

## Beschreibung

Die Erfindung betrifft ein Verfahren zur Verwaltung von Überwachungsdaten, die zum Überwachen eines Telekommunikationsendgerätes mittels einer ihm zugeordneten Heimatvermittlungsstelle eines intelligenten Netzwerks dienen.

Weiters betrifft die Erfindung ein Telekommunikationssystem, welches zur Verwaltung von Überwachungsdaten eingerichtet ist, die zum Überwachen eines Telekommunikationsendgerätes mittels einer ihm zugeordneten Heimatvermittlungsstelle eines intelligenten Netzwerks dienen.

Bei einem intelligenten Netz kurz IN handelt es sich um ein Netzwerkkonzept, mit dem Telekommunikationsdienste kostengünstiger angeboten werden können. Ein intelligentes Netz ist keine spezielle physikalische Netzplattform, sondern eine dienstorientierte Architektur, die auf einer bereits vorhandenen Netzwerkstruktur, beispielsweise dem PSTN-Netz, aufsetzt und diese mit zusätzlichen Leistungsmerkmalen ausstattet. Üblicherweise erfolgt die Verwaltung der Leistungsmerkmale in einem IN zentral.

Als Steuerzentrale für die Dienste im IN fungieren die Dienstkontrollpunkte oder "Service Control Points", wobei allen Netzwerkkomponenten des IN Adressen, unter denen sie angesprochen werden können, zugeordnet sind. Der Dienstkontrollpunkt kann ein Computer oder Datenbanksystem sein, das Service-Programme ausführt und einen Customer-Service über ein Schaltsystem bietet.

Die Funktion der Dienstkontrollpunkte besteht im wesentlichen darin, dass sie mit Unterstützung zentraler Datenbanken die Verkehrsführung für die IN-Verbindungen und die Verwaltung der Gebühren- und Statistikdaten übernehmen.

Dabei übernimmt der "Service Management Point", Daten zum Zwecke der Konfiguration und des Dienst-Managements. Bei Nutzung eines IN-Dienstes wird die Anforderung von einem sogenannten "Service Switching Point" oder kurz SSP, erkannt und vom SCP bearbeitet. SSP-Knoten sind digitale Vermittlungsstellen, die mit speziellen Steuerungsfunktionen ausgestattet sind. Sie erkennen die intelligenten Telekommunikationsdienste und übernehmen die dienstneutrale Verbindungssteuerung in einem intelligenten Netzwerk. Die Empfehlungen der ITU beschreiben unter Q.1200 die intelligenten Netze.

Da in ihnen die funktionalen Elemente der Vermittlung und des Dienstes voneinander getrennt sind, sind intelligente Netzwerke vom Ansatz her flexibler als andere vermittlungsorientierte Netze. Vermittlungsfunktionen sind bei dem Konzept der Intelligenten Netze nicht mehr ausschließlich in den Vermittlungsstellen konzentriert, sondern können von speziellen Rechnern, den bereits oben erwähnten "Service Switching Points" ausgeführt werden. Vermittlungstechnische Aufgaben des IN werden üblicherweise über ein SS#7-Netzwerk ausgeführt. Bei der Trennung der Funktionen von Vermittlung und Dienst spricht man von einer verteilten Dienstmerkmalsteuerung.

Intelligente Netzwerke können dank ihrer dienstneutralen Software schnell neue Dienste generieren. Der wesentliche Unterschied zu allen anderen Netzwerkkonzepten liegt also in den Möglichkeiten der schnellen, netzwerkunabhängigen Implementation neuer Dienste. So können Dienste über eine einfache Beschreibung, die sogenannte Service Plane, definiert werden.

Darüber hinaus sind sie unabhängig von den angebotenen Diensten und den vorhandenen Netzen.

Bei einem intelligenten Netzwerk handelt es sich also aus Anwendersicht um eine Vielzahl von Leistungsmerkmalen, die eine Optimierung der Telekommunikationsabläufe ermöglichen.

Von Gesetzgebern wird in zunehmenden Maß verlangt, dass Betreiber intelligenter Netzwerke Funktionen zur Verfügung stellen, die es ermöglichen, im Bedarfsfall den Datenaustausch einzelner Benutzer zu überwachen.

Das legale Abhören von Datenströmen, die sogenannte "Lawful Interception", in einem intelligenten Netzwerk wird zur Zeit unterschiedlich gelöst.

Üblicherweise erfolgt die Überwachung des Datenverkehrs in einem intelligenten Netzwerk dezentral. Das bedeutet, dass in allen Vermittlungsstellen mit SSP-Funktionalität (IN-Verbindungen können nur hier bearbeitet werden) alle Daten, die zur Administration und Ausführung einer Überwachung notwendig sind, vorhanden sein müssen. Diese Daten, die zur Administration und Ausführung einer Überwachung notwenig sind, werden in diesem Dokument als Überwachungsdaten bezeichnet und enthalten bekannter Weise Informationen darüber wie abgehört werden soll, beispielsweise ob Tickets erstellt werden sollen - ein Ticket beinhaltet Informationen darüber, welche Systemfunktionen, beispielsweise ein Weckauftrag, über das Telekommunikationsendgerät aktiviert werden, oder ob eine Aufzeichnung von Sprachdaten erfolgen soll - siehe dazu die Standards ETSI ES 201 158, EZSI ES 201 671 sowie ETSI ER 331. Weiters können die Überwachungsdaten Routinginformationen darüber, wohin im Rahmen der Überwachung aufgezeichnete Ergebnisdaten, beispielsweise zu Zwecken der Auswertung, übertragen werden sollen. Auch können die Überwachungsdaten Informationen darüber enthalten, wie und ob eine Kodierung der Adresse eines zu überwachenden Telekommunikationsendgerätes erfolgen soll, beispielsweise kann eine vorgebbare Identifikationsnummer anstelle der Adresse übertragen werden.

Die Überwachungsdaten werden im Überwachungsfall verwendet, um eine Überwachungsverbindung aufzubauen.

Muss ein neuer Überwachungsfall eingerichtet werden, ist dies in allen Vermittlungsstellen mit SSP-Funktionalität durchzuführen. Zum Begriff der "Lawful Interception" in einem "Intelligent Network" siehe auch den Standard ETSI EG 201 781 V1.1.1.

Die oben beschriebene Vorgangsweise erfordert eine aufwendige Verwaltungsarbeit durch die überwachende Behörde, um die Daten konsistent zu halten. Wird z. B. eine Vermittlungsstelle mit SSP-Funktionalität nachgerüstet und die Überwachungsbehörde nicht sofort informiert, kann es zu Überwachungslücken kommen, die unter allen Umständen zu vermeiden sind.

Eine Aufgabe der Erfindung ist es daher die genannten Nachteile zu überwinden und eine einfache und konsistente Verwaltung der Überwachungsdaten zu gewährleisten.

Diese Aufgabe wird mit einem Verfahren der eingangs genannten Art dadurch gelöst, dass die Überwachungsdaten in einer ausgewählten Vermittlungsstelle des intelligenten Netzes zentral verwaltet werden, und auf Anforderung an die Heimatvermittlungsstelle übermittelt werden, die anhand dieser Überwachungsdaten die Überwachung des Telekommunikationsendgerätes durchführt.

Es ist ein Verdienst der Erfindung, durch die zentrale Verwaltung der Überwachungsdaten, die Konsistenz dieser Daten zu gewährleisten und eine einfache Erweiterung des Netzes mittels weiterer SSP-Vermittlungsstellen zu ermöglichen, ohne die Überwachungsfunktionalität zu beeinträchtigen. Mit dem neuen, zentralisierten Verwaltungsverfahren wird eine beliebige Vermittlungsstelle im Netz ausgewählt um die Überwachungsdaten aufzunehmen. Die Überwachungsbehörde braucht dann nur noch die Überwachungsdaten in dieser Vermittlungsstelle zu verwalten. Darüber hinaus werden potenzielle Fehlermöglichkeiten, die aus der bisher üblichen n-fache Datenhaltung resultieren, verringert werden, wobei n der Anzahl der Vermittlungsstellen entspricht, in denen die Überwachungsdaten bei dem bekannten dezentralen Verwaltungsverfahren gespeichert sind.

Vorteilhafterweise erfolgt die zentrale Verwaltung der Überwachungsdaten in der ausgewählten Vermittlungsstelle mittels einer Datenbank.

Eine günstige Variante der Erfindung sieht vor, dass die Anforderung zur Übermittlung der Überwachungsdaten bei einem IN-Verbindungsaufbau mit einem weiteren Telekommunikationsendgerät von der Heimatvermittlungsstelle generiert und an die ausgewählte Vermittlungsstelle übermittelt wird.

Weiters kann es vorgesehen sein, dass die Anforderung zur Übermittlung der Überwachungsdaten bei einem IN-Verbindungsaufbau mit einem weiteren Telekommunikationsendgerät und/oder Aktivierung des zu überwachenden Telekommunikationsendgerätes von der Heimatvermittlungsstelle generiert und an die ausgewählte Vermittlungsstelle übermittelt wird.

Günstigerweise erfolgt die Übermittlung der Überwachungsdaten gemäß dem TCAP-Protokoll.

Eine vorteilhafte Variante der Erfindung sieht vor, dass die übermittelten Überwachungsdaten in der Heimatvermittlungsstelle für die Dauer eines Überwachungsvorganges gespeichert und hernach wieder gelöscht werden.

Weitere Vorteile lassen sich dadurch erzielen, dass eine zentrale Verwaltungseinheit vorgesehen ist, die überwacht, ob ein Verbindungsaufbau unter Beteiligung des zu überwachenden Telekommunikationsendgerätes hergestellt werden soll und/oder ob eine Aktivierung des zu überwachenden Telekommunikationsendgerätes erfolgt, wobei bei Initialisierung eines Verbindungsaufbaus und/oder Aktivierung des Telekommunikationsendgerätes zwischen der Heimatvermittlungsstelle und der Verwaltungseinheit Benachrichtigungsdaten ausgetauscht werden.

Bevorzugter Weise erfolgt der Austausch von Benachrichtigungsdaten zwischen der zentralen Verwaltungseinheit und der Heimatvermittlungsstelle über eine INAP-Schnittstelle.

Weiters kann in der zentralen Verwaltungseinheit ein Überwachungsauftrag eingetragen werden.

Besondere Vorteile lassen sich dadurch erzielen, dass der Überwachungsauftrag eine dem zu überwachenden Telekommunikationsendgerät zugeordnete IN-Adresse und/oder E.164-Rufnummer enthält.

Zur Auswertung können die Ergebnisdaten der Überwachung von der Heimatvermittlungsstelle an eine Auswerteeinheit übertragen werden.

Zur Durchführung des erfindungsgemäßen Verfahrens eignet sich insbesondere ein Telekommunikationssystem der eingangs genannten Art, bei welchem eine ausgewählte Vermittlungsstelle des intelligenten Netzes dazu eingerichtet ist, die Überwachungsdaten zentral zu verwalten, und diese Daten auf Anforderung an die Heimatvermittlungsstelle zu übermitteln, die dazu eingerichtet ist, anhand der Überwachungsdaten die Überwachung des Telekommunikationsendgerätes durchzuführen.

Vorteilhafterweise weist die ausgewählte Vermittlungsstelle eine Datenbank zur Verwaltung der Überwachungsdaten auf.

Weiters kann die Heimatvermittlungsstelle dazu eingerichtet sein, die empfangenen Überwachungsdaten für die Dauer eines Überwachungsvorganges zu speichern und danach wieder zu löschen.

Weitere Vorteile lassen sich dadurch erzielen, dass das Telekommunikationssystem dazu eingerichtet ist, falls eine IN-Telekommunikationsverbindung unter Beteiligung des zu aktivierenden Telekommunikationsendgerätes hergestellt werden soll und/oder eine dieses Telekommunikationsendgerätes Aktivierung erfolgt, Benachrichtigungsdaten zwischen der Heimatvermittlungsstelle und der zentralen Verwaltungseinheit auszutauschen.

Zum Austausch der Benachrichtigungsdaten zwischen der zentralen Verwaltungseinheit und der Heimatvermittlungsstelle kann eine INAP-Schnittstelle vorgesehen sein.

Eine vorteilhafte Variante der Erfindung besteht darin, dass die zentrale Verwaltungseinheit dazu eingerichtet ist, einen Überwachungsauftrag entgegenzunehmen.

Der Überwachungsauftrag kann eine dem zu überwachenden Telekommunikationsendgerät zugeordnete IN-Adresse und/oder E.164-Rufnummer enthalten.

Zu Auswertungszwecken können Ergebnisdaten der Überwachung von der Heimatvermittlungsstelle an eine Auswerteeinheit übertragen werden.

Die Erfindung samt weiterer Vorteile ist im folgenden anhand einiger nicht einschränkender Ausführungsbeispiele, die in der Zeichnung veranschaulicht sind, dargestellt, in dieser zeigen schematisch:
Fig. 1 ein Telekommunikationssystem nach der Erfindung, und
Fig. 2 einen beipielsweisen Ablauf des erfindungsgemäßen Verfahrens.

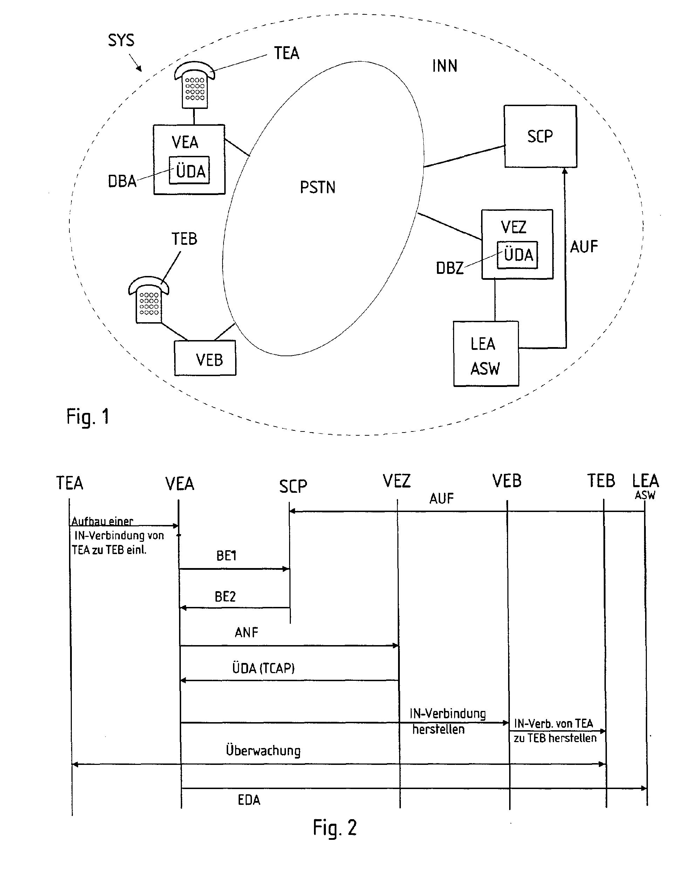

Gemäß Fig. 1 weist ein erfindungsgemäßes Telekommunikationssystem SYS zur Verwaltung von Überwachungsdaten ÜDA in einem intelligenten Netzwerk INN eine einem zu überwachenden Telekommunikationsendgerät TEA zugeordnete Heimatvermittlungsstelle VEA sowie eine ausgewählte Vermittlungsstelle VEZ zur zentralen Verwaltung der Überwachungsdaten auf. Zur Überwachung des Telekommunikationsendgerätes TEA wird von einer befugten Behörde ein Überwachungsauftrag AUF in dem zentralen Verwaltungseinheit SCP, vorzugsweise einem "Service Control Pomt", eingetragen. In dem vorliegenden Ausführungsbeispiel ist das intelligente Netz INN auf dem PSTN-Netz aufgesetzt.

Dem Telekommunikationsendgerät TEA kann in dem intelligenten Netzwerk INN sowohl eine IN-Adresse als auch eine E.164-Rufnummer zugeordnet sein. Die zentrale Verwaltungseinheit SCP ist dazu eingerichtet, nach Erhalt des Überwachungsauftrages AUF, der beispielsweise die IN-Adresse oder die E.164-Rufnummer des Telekommunikationsendgerätes TEA enthält, zu überprüfen, ob über dieses Telekommunikationsendgerät TEA eine IN-Verbindung aufgebaut werden soll bzw. ob eine Aktivierung dieses Telekommunikationsendgerätes erfolgt. Unter Aktivierung eines Telekommunikationsendgerätes wird in diesem Dokument, die in Anspruchnahme von Systemfunktionen des intelligenten Netzes INN, wie beispielsweise die Benutzung eines Weckdienstes, verstanden.

Zusätzlich werden in einer ausgewählten Vermittlungsstelle VEZ Überwachungsdaten ÜDA eingerichtet. Diese Überwachungsdaten dienen, wie bereits eingangs erwähnt, zur Durchführung eines konkreten Überwachungsauftrages und können in der ausgewählten Vermittlungsstelle VEZ verwaltet werden. Zur Verwaltung der Überwachungsdaten ÜDA kann eine Datenbank DBZ vorgesehen sein.

Die Verwaltung der Überwachungsdaten ÜDA kann von Seiten der überwachenden Behörde LEA oder automatisiert durch die ausgewählte Vermittlungsstelle VEZ erfolgen.

Ergebnisdaten einer Überwachung können an eine Auswerteeinheit ASW der überwachenden Behörde LEA zugestellt werden.

Am Beispiel einer IN-Verbindung zwischen zwei Telekommunikationsendgeräten TEA, TEB soll das erfindungsgemäße Verfahren näher erläutert werden. Beim Aufbau einer IN-Verbindung (Fig. 2) unter Beteiligung des zu überwachenden Telekommunikationsendgerätes TEA mit einem weiteren Telekommunikationsendgerät TEB wird von der zentralen Verwaltungseinheit SCP der Überwachungsfall erkannt und der Teilnehmervermittlungsstelle VEA des überwachten Telekommunikationsendgerätes TEA, beispielsweise über eine, hier nicht dargestellte, "intelligente Netzwerk Applikation Protokolls Schnittstelle kurz INAP-Schnittstelle, mitgeteilt. Unter einer INAP-Schnittstelle versteht man eine standardisierte Schnittstelle für intelligente Netze INN.

Die Teilnehmervermittlungsstelle VEA beginnt nun eine Kommunikation, beispielsweise gemäß dem "Transmission Capability Applications Part" Protokoll oder kurz TCAP Protokoll mit der ausgewählten Vermittlungsstelle VEZ, welche die Überwachungsdaten zentral verwaltet, und generiert bzw. übermittelt eine Anforderung zur Übermittlung der Überwachungsdaten an die ausgewählte Vermittlungsstelle VEZ.

Unter einem TCAP-Protokoll versteht man ein verbindungsloses SS#7-Protokoll für einen Informationsaustausch, der nicht in Zusammenhang mit einem Ruf oder einer Verbindung steht.

SS#7 stellt ein bekanntes Protokoll dar, welches zur Signalisierung für digitale Fernsprechnetze entwickelt und von der ITU-T standardisiert wurde. Bei diesem Verfahren, das bei ISDN und Mobilfunknetzen, beispielsweise GSM- oder DCS- Netzen, eingesetzt wird, handelt es sich um eine sogenannte Außenband- oder Zentralkanalsignalisierung. Das Signalisierungssystem ist dabei von der Nutzdatenübertragung getrennt und weist deshalb eine eigene Netzstruktur auf, die parallel zum Nutzdatennetz aufgebaut sein kann.

Das SS#7-Protokoll ist in vier Schichten aufgebaut. In den unteren drei Schichten weist das Protokoll einen für alle Anwendungen gemeinsamen Nachrichtentransportteil auf. Der Transportteil bildet ein Transportsystem für Nutzdaten, wobei der Benutzerteil Nutzkanäle und Dienstmerkmale steuert. Es gibt unterschiedliche Benutzerteile für leitungsvermittelte Datennetze und für ISDN sowie Anwendungsteile für Mobilfunknetze, für Betrieb und Wartung und für sogenannte intelligente Netze. Die Datenübertragung über die Signalisierungsverbindungen erfolgt datenpaketorientiert mit 64 kbit/s. Das SS#7-Protokoll wird üblicherweise bei ISDN, GSM und ATM eingesetzt. Eine Beschreibung des SS#7-Protokolls findet man unter den ITU-T- Q.700 bis Q.795.

Typischerweise verläuft die TCAP-Transaktion über zumindest eine Systemdienst-Steuerzentrale, die im vorliegenden Beispiel der zentralen Verwaltungseinheit SCP entspricht, und einen Nachrichtentransferteil. Die Systemdienststeuerzentrale verwaltet die Netzwerkkonfiguration, koordiniert Netzwerkbenutzer und verwaltet Netzwerk-Adressen und Mapping-Tabellen; und der Nachrichtentransferteil erlaubt einen zuverlässigen und schnellen Transport von Zeichennachrichten im Netz.

Nach Empfang der Überwachungsdaten ÜDA für den vorliegenden Überwachungsfall werden diese zur weiteren Nutzung temporär in der Heimatvermittlungsstelle VEA gespeichert. Für diesen Zweck kann in dieser Vermittlungsstelle beispielsweise eine Datenbank DBA vorgesehen sein.

Um die ausgewählte Vermittlungsstelle VEZ zu finden kann ihre IN-Netzadresse der Heimatvermittlungsstelle VEA des überwachten Telekommunikationsendgerätes TEA beispielsweise durch die zentrale Verwaltungseinheit SCP übermittelt werden. Eine andere Möglichkeit besteht darin, dass die IN-Netzadresse der ausgewählten Vermittlungsstelle VEZ statisch in der Heimatvermittlungsstelle VEA gespeichert ist.

Anschließend wird die IN-Verbindung über eine dem zweiten Telekommunikationsendgerät TEB zugeordnete Vermittlungsstelle VEB hergestellt und die Überwachung eines Datenaustausches zwischen den beiden Endgeräten in an sich bekannterweise durchgeführt, beispielsweise gemäß dem eingangs zitierten Standard ETSI EG 201 781 V1.1.1. Die Ergebnisdaten EDA der Überwachung können in der Heimatvermittlungsstelle VEA aufgezeichnet sowie zwischengespeichert und zu einem späteren Zeitpunkt an die Auswerteeinheit ASW der überwachende Behörde LEA zugestellt werden. Eine andere Möglichkeit besteht darin, die Ergebnisdaten EDA permanent an die Auswerteeinheit ASW der überwachenden Behörde LEA zuzustellen.

Nach erfolgter Überwachung können die temporär gespeicherten Überwachungsdaten ÜDA in der Heimatvermittlungsstelle VEA wieder gelöscht werden.

## Patentansprüche

1. Verfahren zur Verwaltung von Überwachungsdaten (ÜDA), die zum Überwachen eines Telekommunikationsendgerätes (TEA) mittels einer ihm zugeordneten Heimatvermittlungsstelle (VEA) eines intelligenten Netzwerks (INN) dienen, **dadurch gekennzeichnet, dass** die Überwachungsdaten (ÜDA) in einer ausgewählten Vermittlungsstelle (VEZ) des intelligenten Netzes zentral verwaltet und auf Anforderung an die Heimatvermittlungsstelle (VEA) übermittelt werden, die anhand dieser Überwachungsdaten (DAT) die Überwachung des Telekommunikationsendgerätes (TEA) durchführt.

2. Verfahren nach Anspruch 1,
**dadurch gekennzeichnet, dass** die zentrale Verwaltung der Überwachungsdaten in der ausgewählten Vermittlungsstelle (VEZ) mittels einer Datenbank (DBZ) erfolgt.

3. Verfahren nach Anspruch 1 oder 2,
**dadurch gekennzeichnet, dass** die Anforderung (ANF) zur Übermittlung der Überwachungsdaten (ÜDA) bei einem IN-Verbindungsaufbau mit einem weiteren Telekommunikationsendgerät (TEB) von der Heimatvermittlungsstelle (VEA) generiert und an die ausgewählte Vermittlungsstelle (VEZ) übermittelt wird.

4. Verfahren nach einem der Ansprüche 1 bis 3,
**dadurch gekennzeichnet, dass** die Anforderung (ANF) zur Übermittlung der Überwachungsdaten (ÜDA) bei Aktivierung des zu überwachenden Telekommunikationsendgerätes (TEA) von der Heimatvermittlungsstelle (VEA) generiert und an die ausgewählte Vermittlungsstelle (VEZ) übermittelt wird.

5. Verfahren nach einem der Ansprüche 1 bis 4,
**dadurch gekennzeichnet, dass** die Übermittlung der Überwachungsdaten (ÜDA) gemäß dem TCAP-Protokoll erfolgt.

6. Verfahren nach einem der Ansprüche 1 bis 5,
**dadurch gekennzeichnet, dass** die übermittelten Überwachungsdaten (ÜDA) in der Heimatvermittlungsstelle (VEA) für die Dauer eines Überwachungsvorganges (ÜWV) gespeichert und hernach wieder gelöscht werden.

7. Verfahren nach einem der Ansprüche 1 bis 6,
**dadurch gekennzeichnet, dass** eine zentrale Verwaltungseinheit (SCP) vorgesehen ist, die überwacht, ob ein Verbindungsaufbau unter Beteiligung des zu überwachenden Telekommunikationsendgerätes (TEA) hergestellt werden soll und/oder ob eine Aktivierung des zu überwachenden Telekommunikationsendgerätes (TEA) erfolgt.

8. Verfahren nach Anspruch 7,
**dadurch gekennzeichnet, dass** ein Überwachungsauftrag (AUF) zur Überwachung des Telekommunikationsendgerätes (TEA) in die zentrale Verwaltungseinheit (SPC) eingetragen wird.

9. Verfahren nach Anspruch 7 oder 8,
**dadurch gekennzeichnet, dass** bei Initialisierung eines Verbindungsaufbaus und/oder Aktivierung des Telekommunikationsendgerätes (TEA) zwischen der Heimatvermittlungsstelle (VEA) und der Verwaltungseinheit (SPC) Benachrichtigungsdaten (BE1, BE2) ausgetauscht werden.

10. Verfahren nach Anspruch 9,
**dadurch gekennzeichnet, dass** der Austausch von Benachrichtigungsdaten (BE1, BE2) zwischen der zentralen Verwaltungseinheit (SPC) und der Heimatvermittlungsstelle (VEA) über eine INAP-Schnittstelle erfolgt.

11. Verfahren nach einem der Ansprüche 8 bis 10,
**dadurch gekennzeichnet, dass** der Überwachungsauftrag (AUF)eine dem zu überwachenden Telekommunikationsendgerät zugeordnete IN-Adresse und/oder E.164-Rufnummer enthält.

12. Verfahren nach einem der Ansprüche 1 bis 11,
**dadurch gekennzeichnet, dass** Ergebnisdaten (EDA) der Überwachung von der Heimatvermittlungsstelle (VEA) an eine Auswerteeinheit (ASW) übertragen werden.

13. Telekommunikationssystem (SYS), welches zur Verwaltung von Überwachungsdaten (ÜDA) eingerichtet ist, die zum Überwachen eines Telekommunikationsendgerätes (TEA) mittels einer ihm zugeordneten Heimatvermittlungsstelle (VEA) eines intelligenten Netzwerks (INN) dienen, **dadurch gekennzeichnet, dass** eine ausgewählte Vermittlungsstelle (VEZ) des intelligenten Netzes (INN) dazu eingerichtet ist, die Überwachungsdaten (ÜDA) zentral zu verwalten, und diese Daten auf Anforderung an die Heimatvermittlungsstelle (VER) zu übermitteln, die dazu eingerichtet ist, anhand der Überwachungsdaten (DAT) die Überwachung des Telekommunikationsendgerätes (TEB) durchzuführen.

14. Telekommunikationssystem nach Anspruch 13,
**dadurch gekennzeichnet, dass** die ausgewählte Vermittlungsstelle (VEZ) eine Datenbank (DBZ) zur Verwaltung der Überwachungsdaten aufweist.

15. Telekommunikationssystem nach Anspruch 13 oder 14,
**dadurch gekennzeichnet, dass** die Heimatvermittlungsstelle (VEA) dazu eingerichtet ist, bei einem IN-Verbindungsaufbau mit einem weiteren Telekommunikationsendgerät (TEB) und/oder bei einer Aktivierung des zu überwachenden Telkommunikationsendgerätes (TEA) eine Anforderung (ANF) zur Übermittlung der Überwachungsdaten (ÜDA) zu generieren und an die ausgewählte Vermittlungsstelle (VEZ) zu übermitteln.

16. Telekommunikationssystem nach einem der Ansprüche 13 bis 15,
**dadurch gekennzeichnet, dass** es dazu eingerichtet ist, die Überwachungsdaten (ÜDA) gemäß dem TCAP-Protokoll zu übermitteln.

17. Telekommunikationssystem nach einem der Ansprüche 13 bis 16,
**dadurch gekennzeichnet, dass** die Heimatvermittlungsstelle (VEA) dazu eingerichtet ist, die empfangenen Überwachungsdaten (ÜDA) für die Dauer eines Überwachungsvorganges (ÜWV) zu speichern und danach wieder zu löschen.

18. Telekommunikationssystem nach einem der Ansprüche 13 bis 17,
**dadurch gekennzeichnet, dass** eine zentrale Verwaltungseinheit (SCP) vorgesehen ist, die dazu eingerichtet ist, zu überwachen, ob eine IN-Telekommunikationsverbindung mittels des zu überwachenden Telekommunikationsendgerätes (TEA) hergestellt werden soll und/oder ob eine Aktivierung dieses Telekommunikationsgerätes erfolgt.

19. Telekommunikationssystem nach Anspruch 18,
**dadurch gekennzeichnet, dass** es dazu eingerichtet ist, falls eine IN-Telekommunikationsverbindung hergestellt werden soll und/oder ob eine Aktivierung erfolgt, Benachrichtigungsdaten (BE1, BE2) zwischen der Heimatvermittlungsstelle (VEA) und der zentralen Verwaltungseinheit (SPC) auszutauschen.

20. Telekommunikationssystem nach Anspruch 19,
**dadurch gekennzeichnet, dass** es zum der Austausch der Benachrichtigungsdaten (BE1, BE2) zwischen der zentralen Verwaltungseinheit (SPC) und der Heimatvermittlungsstelle (VEA) eine INAP-Schnittstelle aufweist.

21. Telekommunikationssystem nach einem der Ansprüche 18 bis 20,
**dadurch gekennzeichnet, dass** die zentrale Verwaltungseinheit (SCP) dazu eingerichtet ist, einen Überwachungsauftrag (AUF) entgegenzunehmen.

22. Telekommunikationssystem nach Anspruch 21,
**dadurch gekennzeichnet, dass** der Überwachungsauftrag (AUF)eine dem zu überwachenden Telekommunikationsendgerät zugeordnete IN-Adresse und/oder E.164-Rufnummer enthält.

23. Telekommunikationssystem nach einem der Ansprüche 13 bis 22,
**dadurch gekennzeichnet, dass** Ergebnisdaten (EDA) der Überwachung von der Heimatvermittlungsstelle (VEA) an eine Auswerteeinheit (ASW) übertragen werden.
